(19) Europäisches Patentamt
European Patent Office
Office européen des brevets

(11) **EP 2 456 802 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: **10730488.3**

(22) Anmeldetag: **14.07.2010**

(51) Int Cl.:
**C08G 18/48** (2006.01)          **C08G 18/63** (2006.01)
**C08G 101/00** (2006.01)

(86) Internationale Anmeldenummer:
**PCT/EP2010/060094**

(87) Internationale Veröffentlichungsnummer:
**WO 2011/009779 (27.01.2011 Gazette 2011/04)**

(54) **VERFAHREN ZUR HERSTELLUNG VON VISKOELASTISCHEN POLYURETHAN-WEICHSCHAUMSTOFFEN**

METHOD FOR PRODUCING VISCOELASTIC POLYURETHANE FLEXIBLE FOAM MATERIALS

PROCÉDÉ DE PRÉPARATION DE MOUSSES SOUPLES DE POLYURÉTHANE VISCOÉLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.07.2009 EP 09165901**

(43) Veröffentlichungstag der Anmeldung:
**30.05.2012 Patentblatt 2012/22**

(73) Patentinhaber: **BASF SE**
**67056 Ludwigshafen (DE)**

(72) Erfinder:
• **LUTTER, Heinz-Dieter**
  **49459 Lembruch (DE)**
• **MÜLLER, Jens**
  **49393 Lohne (DE)**
• **FREIDANK, Daniel**
  **49448 Lemförde (DE)**
• **SMIECINSKI, Theodore M.**
  **Woodhaven**
  **MI 48183 (US)**
• **GÖTTKE, Stephan**
  **49456 Bakum (DE)**
• **ELING, Berend**
  **49448 Lemförde (DE)**

(56) Entgegenhaltungen:
**WO-A1-01/25305      US-A1- 2004 044 091**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist ein Verfahren zur Herstellung von viskoelastischen Polyurethan-Weichschaumstoffen durch Umsetzung von Polyisocyanaten mit Verbindungen mit mindestens zwei mit Isocyanatgruppen reaktiven Wasserstoffatomen.

Viskoelastische Polyurethan-Weichschaumstoffe erlangen in den letzten Jahren eine immer größere Bedeutung. Ihr Einsatz erfolgt insbesondere zur Herstellung von Polstern, Matratzen oder zur Schwingungsdämpfung, beispielsweise bei der Teppichhinterschäumung.

Viskoelastische Polyurethan-Weichschaumstoffe zeichnen sich dadurch aus, dass ihre Glasübergangstemperatur in der Nähe der Raumtemperatur liegt.

Die Glasübergangstemperatur wird mittels dynamisch-mechanischer Analyse (DMA) bei einer Frequenz von 1 Hz und einem Temperaturbereich von -80 bis +200°C bestimmt. Die erfindungsgemäßen viskoelastischen Weichschäume zeichnen sich durch einen absoluten Maximalwert des Verlustmoduls tan delta im Temperaturbereich von -10 bis 40°C, vorzugsweise -10 bis 35°C und insbesondere von -6 bis 35°C aus. Die viskoelastischen Schaumstoffe weisen insbesondere eine Rückprallelastizität nach DIN EN ISO 8307 unter 30 % sowie ein hohes Dämpfungsverhalten auf, welches sich durch einen Wert für tan delta > 0.2 bei Raumtemperatur ausdrückt.

Die Einstellung der viskoelastischen Eigenschaften erfolgt vorzugsweise durch die Wahl der Einsatzstoffe, insbesondere der Polyole.

Eine Möglichkeit zur Herstellung von viskoelastischen Schaustoffen ist der Einsatz von Gemischen aus vorzugsweise dreifunktionellen Polyetheralkoholen mit einer Hydroxylzahl von 20 bis 100 und mindestens einem vorzugsweise dreifunktionellen Polyetheralkohol mit einer Hydroxylzahl im Bereich zwischen 160 und 250 und im wesentlichen Propylenoxideinheiten in der Kette.

Nachteilig an derartigen Schaumstoffen ist, insbesondere bei der Verwendung von Toluylendiisocyanat (TDI) als Polyisocyanat, ihre hohe Geschlossenzelligkeit, die zu Problemen bei der Verarbeitung und zu verschlechterten mechanischen Eigenschaften führt.

Weiterhin können die viskoelastischen Eigenschaften dadurch erreicht werden, dass als Verbindungen mit mindestens zwei mit Isocyanatgruppen reaktiven Wasserstoffatomen Gemische aus mindestens einem Polyetheralkohol mit einem hohen Gehalt an Ethylenoxid, vorzugsweise mindestens 50 Gew.-%, und mindestens einem mit diesen Polyetheralkoholen unverträglichen Polyetheralkohol mit einem hohen Gehalt am Propylenoxid, vorzugsweise mindestens 90 Gew.-%, eingesetzt werden. Eine solche Methode ist beispielsweise in WO 2007/065837 beschrieben.

US 2004/0254256 beschreibt viskoelastische Schaumstoffe, bei deren Herstellung die Polyolkomponente 30 bis 70 Gew.-Teile eines Polyetheralkohols mit einem hohen Anteil von Ethylenoxideinheiten in der Polyetherkette enthält. EP 1 240 228 beschreibt die Herstellung von viskoelastischen Schaumstoffen unter Verwendung von Polyetheralkoholen, die einen Gehalt an Ethylenoxid in der Polyetherkette von mindestens 50 Gew.-% und eine Hydroxylzahl im Bereich zwischen 40 und 50 aufweisen.

Durch den Einsatz der ethylenoxidreichen Polyetheralkohole wird die Offenzelligkeit der Schaumstoffe erhöht. Nachteilig an der Verwendung von Polyetheralkholen mit einem hohen Anteil an Ethylenoxid in der Kette ist die Erhöhung der Hydrophilie der Schaumstoffe. Dadurch quellen diese Schäume bis zu 40 Vol % im Kontakt mit Wasser auf. Dieses Quellverhalten ist für Anwendungen in feuchten Umgebungen inakzeptabel. Weiterhin weisen Schaumstoffe mit einem hohen Gehalt an Ethylenoxid eine unzureichende Stabilität bei der Feucht-Wärme-Alterung auf.

Eine weitere Möglichkeit der Einstellung von viskoelastischen Eigenschaften ist der Zusatz von Weichmachern und/oder Monoolen, wie beispielsweise in WO 02/088211 beschrieben. WO 01/25305 beschreibt zusätzlich den Einsatz von 30 - 70 Teilen Polymerpolyol zur Herstellung von viskoelastischen Schäumen.

In WO 04/0254256 wird ein Verfahren zur Herstellung von viskoelastischen Schaumstoffen beschrieben, bei dem als Polyolkomponente eine Mischung aus mindestens einem ethylenoxidreichen Polyetheralkohol und mindestens einem propylenoxidreichen Polyetheralkohol eingesetzt wird. Je nach dem Mengenverhältnis der eingesetzten Polyole untereinander kann die Hydrophilie der Schaumstoffe eingestellt werden. Andere Technologien beruhen auf einem pneumatischen Effekt, worunter verstanden wird, dass die viskoelastischen Eigenschaften primär auf die verminderte Luftdurchlässigkeit und das resultierende langsame Rückstellvermögen der Schäume zurückzuführen sind. Unter Dauerbelastung werden die Zellen geöffnet, wodurch sich mit zunehmender Belastung / Nutzung der pseudo-viskoelastische Effekt sich verringert. Im Gegensatz zum Stand der Technik weisen erfindungsgemäße Polyurethanweichschäume aufgrund der Polymermatrix ein intrinsisches viskoelastisches Verhalten bei gleichzeitiger Offenzelligkeit und geringem Quellverhalten bei Kontakt mit Wasser auf.

Nachteilig an diesem Verfahren ist wiederum, dass die Schaumstoffe eine für viele Einsatzzwecke zu hohe Hydrophilie aufweisen.

Es war Aufgabe der vorliegenden Erfindung, viskoelastische Polyurethan-Weichschaumstoffe mit guten mechanischen Eigenschaften, insbesondere einem optimalen Druckverformungsrest, sowohl trocken als auch trocken und feucht, bereitzustellen, deren Herstellung unabhängig vom eingesetzten Polyisocyanat problemlos möglich ist. Weiterhin sollten die VE-Schäume ohne Qualitätsverlust, insbesondere in Bezug auf die Rückprallelastizität und die Dehnung in ihrer Härte eingestellt werden können.

Die Aufgabe konnte überraschenderweise dadurch gelöst werden, dass die Verbindungen mit mindestens zwei mit Isocyanaten reaktiven Wasserstoffatomen einen im wesentlichen aus Propylenoxid aufgebauten Polyetheralkohol mit einer Hydroxylzahl im Bereich zwischen 100 und 350 mgKOH/g und ein Graftpolyol, das durch in-situ-Polymerisation von ethylenisch ungesättigten Monomeren in einem Polyetheralkohol mit dem gleichen Aufbau hergestellt wird.

Gegenstand der Erfindung ist demzufolge ein Verfahren zur Herstellung von viskoelastischen Polyurethan-Weichschaumstoffen durch Umsetzung von

a) Polyisocyanaten mit

b) Verbindungen mit mindestens zwei mit Isocyanatgruppen reaktiven Wasserstoffatomen,

c) Treibmitteln,

dadurch gekennzeichnet, dass die Verbindungen mit mindestens zwei mit Isocyanat-gruppen reaktiven Wasserstoffatomen b)

b1) 5 bis 90 Gew.-Teile mindestens eines Polyetheralkohols, bestehend aus ausschließlich Propylenoxideinheiten oder Propylenoxideinheiten und maximal 50 Gew.-%, bezogen auf die Gesamtmenge der eingesetzten Alkylenoxide Ethylenoxideinheiten in der Polyetherkette, mit einer nominalen Funktionalität von 3-8 und einer Hydroxylzahl im Bereich von 100 bis 350 mgKOH/g,

b2) 10 bis 95 Gew.-Teile mindestens eines Graftpolyols, herstellbar durch in-situ-Polymerisation von olefinisch ungesättigten Monomeren in mindestens einem Polyetheralkohol, der ausschließlich Propylenoxideinheiten oder Propylenoxideinheiten und maximal 50 Gew.-%, bezogen auf die Gesamtmenge der eingesetzten Alkylenoxide Ethylenoxideinheiten in der Polyetherkette, eine nominale Funktionalität von 2-8 und eine Hydroxylzahl im Bereich von 100 bis 350 mgKOH/g aufweist, mit einem Feststoffgehalt von maximal 60 Gew.-% bezogen auf die Gesamtmenge der eingesetzten Polyole und Feststoff,

wobei die Summe der Gewichtsteile b1) und b2) 100 beträgt.

Gegenstand der Erfindung sind weiterhin die nach dem erfindungsgemäßen Verfahren hergestellten Polyurethan-Weichschaumstoffe.

Vorzugsweise wird der Polyetheralkohol b1) in einer Menge von 5-90 Gewichtsteilen, besonders bevorzugt in einer Menge von 10-90 Gewichtsteilen, und das Graft-Polyol in einer Menge von 10 bis 95, besonders bevorzugt in einer Menge von 10-90 Gewichtsteilen eingesetzt, wobei die Summe der Gewichtsteile b1) und b2) 100 beträgt.

Vorzugsweise hat der Polyetheralkohol b1) maximal 25 Gew.-%, besonders bevorzugt maximal 15 Gew.-%, und insbesondere maximal 5 Gew.-%, bezogen auf die Gesamtmenge der eingesetzten Alkylenoxide, Ethylenoxideinheiten in der Polyetherkette.

Vorzugsweise hat der Polyetheralkohol b1) eine Funktionalität von 3 bis 8, besonders bevorzugt von 3 bis 6, insbesondere von 3 bis 4.

Vorzugsweise hat das Graftpolyol b2) maximal 50 Gew.-%, insbesondere bevorzugt 25 Gew.-%, besonders bevorzugt maximal 15 Gew.-%, und insbesondere maximal 5 Gew.-%, bezogen auf die Gesamtmenge der eingesetzten Alkylenoxide, Ethylenoxideinheiten in der Polyetherkette.

Vorzugsweise hat das Graftpolyol b2) eine Funktionalität von 3 bis 6, besonders bevorzugt von 3 bis 4.

Zusätzlich zu den Polyolen b1) und b2) kann die Komponente b), wie oben beschrieben, bis zu 70 Gew.-Teile mindestens eines Polyetheralkohols b3), bestehend aus ausschließlich Propylenoxideinheiten oder Propylenoxideinheiten und maximal 20 Gew.-% bezogen auf die Gesamtmenge der eingesetzten Alkylenoxide, Ethylenoxideinheiten in der Polyetherkette, mit einer nominalen Funktionalität von 2 und einer Hydroxylzahl im Bereich von 50 bis 350 mgKOH/g.

Die Summe der Gewichtsteile von b1, b2 und b3 beträgt vorzugsweise größer 100 und maximal 200 Gew.-Teile, besonders bevorzugt 1-170 Gewichtsteile.

Zusätzlich zu den Polyolen b1) und b2) kann die Komponente b) bis zu 30 Gew.-Teile mindestens eines Polyetheralkohols b4), bestehend aus ausschließlich Ethylenoxideinheiten oder Ethylenoxideinheiten und maximal 20 Gew.-% bezogen auf die Gesamtmenge der eingesetzten Alkylenoxide, Propylenoxideinheiten in der Polyetherkette, mit einer nominalen Funktionalität von 2 und einer Hydroxylzahl im Bereich von 50 bis 550 mgKOH/g.

Die Summe der Gewichtsteile von b1, b2 und b4 beträgt vorzugsweise größer 100 und maximal 150 Gew.-Teile, besonders bevorzugt 1-130 Gewichtsteile

In einer weiteren Ausführungsform der Erfindung können sowohl der Polyetheralkohol b3) als auch der Polyetheralkohol b4) in den angegebenen Mengen eingesetzt werden.

Die Summe der Gewichtsteile b1, b2, b3 und b4 beträgt vorzugsweise größer 100 und maximal 250 Gew.-Teile, besonders bevorzugt 2-250 Gewichtsteile.

Wenn bei den Polyetheralkoholen b1) bis b4) zwei Alkylenoxide verwendet werden, können diese in Form von Blöcken oder in Form einer Statistik angelagert werden.

Als Polyisocyanate a) können prinzipiell alle bekannten Verbindungen mit mindestens zwei Isocyanatgruppen im Molekül eingesetzt werden. Vorzugsweise werden Diisocyanate eingesetzt. Bevorzugt kommen für das erfindungsgemäße Verfahren Diphenylmethandiisocyanat (MDI) und/oder Toluylendiisocyanat (TDI) zum Einsatz.

Bei der Verwendung von TDI werden zumeist Gemische aus dem 2,4- und dem 2,6-Isomeren eingesetzt. Dabei sind die handelsüblichen Mischungen mit 80 % 2,4 und 60 % 2,6-TDI und 35 % 2,4 und 35 % 2,6-TDI besonders bevorzugt.

Bei der Verwendung von MDI können das reine 4,4'-Isomere, das reine 2,4'-Isomere sowie beliebige Mischungen der beiden Isomeren untereinander, die auch bis zu 5 Gew.-% des 2,2'-Isomeren enthalten können, eingesetzt werden. An Stelle der reinen Isocyanate oder im Gemisch mit diesen werden häufig sogenannte modifizierte Isocyanate eingesetzt, da reines MDI als Feststoff schwierig zu verarbeiten ist. Derartige modifizierte Isocyanate können beispielsweise durch Einbau von Gruppen in die Polyisocyanate entstehen. Beispiele für derartige Gruppen sind Urethan-, Allophanat-, Carbodiimid-, Uretonimin-, Isocyanurat-, Harnstoff- und Biuretgruppen. Besonders bevorzugt sind mit Urethangruppen modifizierte Polyisocyanate, die üblicherweise durch Umsetzung der Isocyanate mit einem Unterschuss an H-funktionellen Verbindungen hergestellt werden. Derartige Verbindungen werden häufig als NCO-Prepolymere bezeichnet. Ebenfalls besonders bevorzugt sind Carbodiimid- oder Uretonimin-haltige Polyisocyanate, die durch gezielte katalysierte Umsetzung von Isocyanaten mit sich selber entstehen. Weiterhin können Mischungen aus TDI und MDI eingesetzt werden.

Die für das erfindungsgemäße Verfahren eingesetzten Polyetheralkohole können nach den üblichen und bekannten Verfahren hergestellt werden. Dies erfolgt zumeist durch basisch, meist alkalisch, katalysierte Anlagerung niederer Alkylenoxide, zumeist Ethylenoxid und/oder Propylenoxid, an hydroxyfunktionelle Startsubstanzen.

Als Startsubstanzen für die dreifunktionellen Polyetheralkohole b1) werden zumeist 3-funktionelle Alkohole, wie Glyzerin, Trimethylolpropan (TMP), Triethanolamin, vorzugsweise Glycerin, eingesetzt. Bei der Herstellung der Polyetheralkohole b3) und b4) werden vorzugsweise zweifunktionelle Alkohole eingesetzt, beispielsweise Wasser, Ethylenglykol, Propylenglykol oder deren höhere Homologe, eingesetzt.

Bei der Herstellung der Polyetheralkohole können, je nach der gewünschten Funktionalität, die genannten zwei- und dreifunktionellen Startsubstanzen einzeln oder in Form von beliebigen Gemischen untereinander eingesetzt werden.

Als Alkylenoxide kommen, wie erwähnt, zumeist Ethylenoxid und/oder Propylenoxid zum Einsatz. Diese können einzeln, nacheinander oder im Gemisch miteinander angelagert werden.

In einer Ausführungsform der erfindungsgemäß verwendeten Polyetheralkohole können als Katalysator anstelle von basischen Verbindungen Multimetallcyanidverbindungen, auch als DMC-Katalysatoren, eingesetzt werden. Dies ist insbesondere bei den Polyetheralkoholen vorteilhaft, die ganz oder im Wesentlichen aus Propylenoxid aufgebaut sind. Derartige Polyetheralkohole zeichnen sich insbesondere durch einen geringen Gehalt an ungesättigten Verbindungen, vorzugsweise von kleiner 0,010 meq/g aus.

Polyol b1) sollte bevorzugt eine Blockstruktur mit einem Endblock aus Ethylenoxid aufweisen. Die Polyole b2), b3) und b4) können beliebige Strukturen aufweisen, wobei Polyol b2) bevorzugt einen Endblock aus Ethylenoxid aufweist.

Unter Graftpolyolen b2) versteht man, wie oben ausgeführt, Polyetheralkohole, in denen in-situ olefinisch ungesättigte Monomere polymerisiert wurden. Bevorzugte olefinisch ungesättigte Monomere sind Styrol und Acrylnitril. Bevorzugt sind Graftpolyole, hergestellt durch Polymerisation von olefinisch ungesättigten Monomeren in einem Carrierpolyol mit einer Hydroxylzahl im Bereich zwischen 100 und 350 mgKOH/g. Der Feststoffgehalt liegt vorzugsweise mindestens bei 5, 15, besonders bevorzugt 25 und insbesondere 45 Gew.-% und höchstens bei 60 Gew.-%, jeweils bezogen auf das Gewicht des Graftpolyols. Die Polymere liegen in dem Polyetheralkohol in Form einer Dispersion vor. Die Dispersion ist stabil, das heißt, dass keine Absetzung der Partikel erfolgt. Die Graftpolyole haben, abhängig vom Feststoffgehalt, eine Hydroxylzahl im Bereich zwischen 40-330 mgKOH/g. Vorzugsweise ist die Hydroxylzahl mindestens 50-230, besonders bevorzugt 60-200 mgKOH/g.

Die Hydroxylzahl des Graftpolyols b2) berechnet sich vorzugsweise nach der Formel

$$\text{Hydroxylzahl Graftpolyol} = \text{Hydroxylzahl Carrierpolyol} \times (100-F) / 100$$

F ist dabei der Zahlenwert für den Feststoffgehalt des Graftpolyols in Gew.-%, bezogen auf das Gewicht des Graftpolyols.

In einer bevorzugten Ausführungsform der Erfindung werden als Polyole, in denen die Polymerisation durchgeführt wird, auch als Carrierpolyole bezeichnet, die gleichen Polyole eingesetzt, die als Komponente b1) eingesetzt werden. Für die Berechnung der Hydroxylzahl des Graftpolyols kann dann die genannte Formel verwendet werden, wobei die Hydroxylzahl des Carrierpolyols dann gleich der Hydroxylzahl des Polyols b1) ist.

Die Graftpolyole b2) können, wie oben beschrieben, durch radikalische Polymerisation der Monomere, vorzugsweise Acrylnitril, Styrol sowie gegebenenfalls weiterer Monomere, eines Makromers, eines Moderators unter Einsatz eines Radikal-Initiators, meist Azo- oder Peroxidverbindungen, in einem Polyetheralkohol beziehungsweise Polyesterol, häufig als Trägerpolyol bezeichnet, als kontinuierlicher Phase hergestellt werden.

Besonders bevorzugt werden die Graftpolyole b2) durch in situ Polymerisation von Acrylnitril, Styrol oder vorzugsweise Mischungen aus Styrol und Acrylnitril, z. B. im Gewichtsverhältnis 90:10 bis 10:90, vorzugsweise 70:30 bis 30:70, hergestellt.

Als Trägerpolyole, auch als Carrierpolyole bezeichnet, kommen, wie beschrieben, insbesondere Polyetheralkohole mit den unter b1) beschriebenen Merkmalen zum Einsatz.

Die Graftpolyole können auch nach der sogenannten Saat-Fahrweise hergestellt werden. Bei dieser Fahrweise wird als zunächst aus einem Polyol und Monomeren ein erster Graftpolyol hergestellt, der in einem zweiten Schritt mit weiteren Monomeren zum fertigen Graftpolyol umgesetzt wird. Diese Fahrweise wird insbesondere angewandt, wenn Graftpolyole mit einer bimodalen Teilchengrößenverteilung, das heißt mit zwei Peaks bei der Verteilungskurve der Teilchen, hergestellt werden sollen.

Makromere, auch als Stabilisatoren bezeichnet, sind lineare oder verzweigte Polyetheralkohole mit Molekulargewichten $\geq$ 1000 g/mol, die mindestens eine endständige, reaktionsfähige olefinisch ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-Derivaten sowie Isocyanat-Derivaten, wie 3-Isopropenyl-1,1-dimethylbenzyl-isocyanate, Isocyanato-ethylmethacrylate, an ein bereits bestehendes Polyol eingefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind beispielsweise in WO 01/04178 und US 6013731 beschrieben.

Während der radikalischen Polymerisation werden die Makromere mit in die Copolymerkette eingebaut. Dadurch bilden sich Blockcopolymere mit einem Polyether- und einen Poly(Acrylnitril-Styrol)-Block, welche in der Grenzfläche von kontinuierlicher Phase und dispergierter Phase als Phasenvermittler wirken und das Agglomerieren der Graftpolyolpartikel unterdrücken. Der Anteil der Makromere beträgt üblicherweise 1 bis 15 Gew.-%, bezogen auf das Gesamtgewicht der zur Herstellung des Graftpolyols eingesetzten Monomere.

Zur Herstellung von Graftpolyolen werden üblicherweise Moderatoren, auch als Kettenüberträger bezeichnet, eingesetzt. Der Einsatz und die Funktion dieser Moderatoren wird beispielsweise in US 4 689 354, EP 0 365 986, EP 0 510 533 und EP 0 640 633, EP 008 444, EP 0731 118 B1 beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graftpolyole beeinflusst. Der Anteil der Moderatoren beträgt üblicherweise 0,5 bis 25 Gew.-%, bezogen auf das Gesamtgewicht der zur Herstellung des Graftpolyols eingesetzten Monomere. Moderatoren, die üblicherweise zur Herstellung von Graftpolyolen eingesetzt werden, sind Alkohole, wie 1-Butanol, 2-Butanol, Isopropanol, Ethanol, Methanol, Cyclohexan, Toluol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und $\alpha$-(Benzoyloxy)styrol.

Zur Initiierung der radikalischen Polymerisation werden üblicherweise Peroxid- oder Azo-Verbindungen, wie Dibenzoyl-peroxid, Lauroyl-peroxid, t-Amylperoxy-2-ethyl-hexanoat, Di-t-butyl-peroxid, Diisopropyl-peroxide-carbonat, t-Butyl peroxy-2-ethyl-hexanoat, t-Butylperpivalat, t-Butylperneo-decanoat, t-Butylperbenzoat, t-Butyl percrotonat, t-Butyl perisobutyrat, t-Butylperoxy-1-methylpropanoat, t-Butylperoxy-2-ethyl-pentanoat, t-Butylperoxyoctanoat und di-t-butylperphthalat, 2,2'-Azobis(2,4-dimethyl-valeronitril), 2,2'-Azobisisobutyronitril (AIBN), Dimethyl-2,2'-azobisisobutyrat, 2,2'-Azobis(2-methylbutyronitril (AMBN), 1,1'-Azobis(1-cyclohexancarbonitril) eingesetzt. Der Anteil der Initiatoren beträgt üblicherweise 0,1 bis 6 Gew.-%, bezogen auf das Gesamtgewicht der zur Herstellung des Graftpolyols eingesetzten Monomere.

Die radikalische Polymerisation zur Herstellung von Graftpolyolen wird aufgrund der Reaktionsgeschwindigkeit der Monomere sowie der Halbwertszeit der Initiatoren üblicherweise bei Temperaturen von 70 bis 150 °C und einem Druck bis zu 20 bar durchgeführt. Bevorzugte Reaktionsbedingungen zur Herstellung von Graftpolyolen sind Temperaturen von 80 bis 140 °C, bei einem Druck von Atmosphärendruck bis 15 bar.

In einer bevorzugten Ausführungsform des erfindungsgemäßen Verfahrens weisen die Graftpolyole eine bimodale Teilchengrößenverteilung auf, wie in WO03/078496 beschrieben.

Gemeinsam mit den Verbindungen mit mindestens 2 mit Isocyanat reaktiven Gruppen können auch Kettenverlängerer und Vernetzer eingesetzt werden. Dabei handelt es sich vorzugsweise um H-funktionelle Verbindungen mit Molekulargewichten von 62 bis 400 g/mol, insbesondere 2- bis 3-funktionelle Alkohole, Amine oder Aminoalkohole. Ihre Menge beträgt insbesondere 0 bis 25, vorzugsweise 2 bis 12 Gewichtsteile, bezogen auf 100 Gewichtsteile Polyetheralkohol und/oder Polyesteralkohole.

Die Herstellung der erfindungsgemäßen Polyurethan-Weichschaumstoffe erfolgt üblicherweise in Anwesenheit von Treibmitteln, Katalysatoren und Hilfs- und/oder Zusatzstoffen.

Als Treibmittel wird vorzugsweise Wasser eingesetzt. Die Menge des eingesetzten Wassers richtet sich nach der angestrebten Dichte des Schaumstoffs und liegt vorzugsweise im Bereich zwischen Gew.- %, 1 - 5 Gew.-%, bezogen auf das Gewicht der Komponente b).

An Stelle von oder gemeinsam mit dem Wasser können auch sogenannte physikalisch wirkende Treibmittel eingesetzt werden. Hierbei handelt es sich vorzugsweise um gegenüber den Polyurethan-Aufbaukomponenten inerte Flüssigkeiten mit Siedepunkten unter 100°C, vorzugsweise unter 50°C, insbesondere im Bereich zwischen 50 und 30°C, die unter dem Einfluss der exothermen Polyadditionsreaktion verdampfen. Beispiele für derartige Flüssigkeiten sind Kohlenwasserstoffe, wie n-, Iso- und/oder Cyclopentan, Ether, Ketone, halogenierte Kohlenwasserstoffe, sofern sie kein Ozonabbaupotential aufweisen, oder Edelgase. Die Menge dieser physikalisch wirkenden Treibmittel beträgt zumeist 1 bis 20 Gew.-Teile, vorzugsweise 2 bis 15 Gew.-Teile, bezogen auf 100 Gew.-Teile der Verbindung mit mindestens 2 mit Isocyanat reaktiven Wasserstoffatomen. Die Menge der eingesetzten Treibmittel hängt von der angestrebten Dichte der Schaumstoffe ab.

Zur Durchführung der Umsetzung werden zumeist die üblichen Polyurethan-Katalysatoren eingesetzt. Hierbei handelt es sich beispielsweise um tertiäre Amine, wie Triethylendiamin, Metallsalze, wie Zinnverbindungen, sowie beliebige Mischungen aus diesen Verbindungen.

Als Hilfsmittel und/oder Zusatzstoffe werden beispielsweise Flammschutzmittel, oberflächenaktive Stoffe, Stabilisatoren, Zellregler, fungistatisch und bakteriostatisch wirkende Substanzen, Antistatika, Farbstoffe, Pigmente und Füllstoffe verwendet. Diese Stoffe werden dem Schaumsystem bei Bedarf zugesetzt, um ihm bestimmte Eigenschaften zu verleihen.

Nähere Angaben zu den verwendeten Komponenten sind beispielsweise dem Kunststoff-Handbuch, Band VII Polyurethane, Carl Hanser Verlag, München, Wien, 1. bis 3. Auflage, 1966, 1983 und 1993 zu entnehmen.

Üblicherweise werden die Verbindungen mit mindestens zwei mit Isocyanatgruppen reaktiven Wasserstoffatomen b), die Treibmittel c), die Katalysatoren sowie die gegebenenfalls mit verwendeten Hilfsmittel und/oder Zusatzstoffe zu einer sogenannten Polyolkomponente vermischt und in dieser Form mit den Polyisocyanaten a) zur Umsetzung gebracht.

Zur Herstellung der erfindungsgemäßen Polyurethan-Weichschaumstoffe werden die Ausgangsverbindungen zumeist bei Temperaturen von 0 bis 100°C, vorzugsweise 15 bis 60°C, in solchen Mengenverhältnissen zur Reaktion gebracht, dass pro NCO-Gruppe 0,5 bis 2, vorzugsweise 0,8 bis 1,3 und insbesondere ungefähr 1 reaktive(s) Wasserstoffatom(e) vorliegen und, bei der Verwendung von Wasser als Treibmittel, die beiden Wasserstoffatome des Wassers in die Gesamtzahl der reaktiven Wasserstoffatome mit einberechnet werden.

Die erfindungsgemäßen Polyurethan-Weichschaumstoffe werden vorzugsweise nach dem one-shot-Verfahren durch Vermischen der Polyol- und der Isocyanatkomponente hergestellt, wobei die Polyolkomponente, wie beschrieben, die Verbindungen mit mindestens zwei mit Isocyanat reaktiven Wasserstoffatomen, gegebenenfalls das Monool sowie Katalysatoren, Treibmittel sowie Hilfs- und/oder Zusatzstoffe und die Isocyanatkomponente das Polyisocyanat sowie gegebenenfalls Katalysatoren, physikalische Treibmittel sowie Hilfs- und/oder Zusatzstoffe enthält. Die beiden Komponenten werden intensiv vermischt und zumeist als Blockschaum verschäumt.

Die erfindungsgemäßen Polyurethan-Weichschaumstoffe weisen hervorragende viskoelastische Eigenschaften auf, da ihre Glasübergangstemperatur in der Nähe der Raumtemperatur liegt.

Die Glasübergangstemperatur wird, wie beschrieben, mittels dynamisch-mechanischer Analyse (DMA) bei einer Frequenz von 1 Hz und einem Temperaturbereich von - 80 bis + 200°C bei einer Deformation von 0,3 % bestimmt. Das Temperaturprogramm wird in 5°C-Schritten durchgeführt. Die erfindungsgemäßen viskoelastischen Weichschäume zeichnen sich durch eine Glasübergangstemperatur, ausgedrückt durch einen absoluten Maximalwert des Verlustmoduls tan delta im Temperaturbereich von -10 bis 40°C, vorzugsweise -10 bis 35°C und insbesondere von -6 bis 35°C aus. Die viskoelastischen Schaumstoffe weisen insbesondere eine Rückprallelastizität nach DIN EN ISO 8307 unter 30 % sowie ein hohes Dämpfungsverhalten auf, welches sich durch einen Wert für tan delta > 0.2 bei Raumtemperatur ausdrückt.

Sie werden insbesondere für dämmende und dämpfende Elemente, insbesondere im Fahrzeugbau, für Polster-, Sitz- oder Liegemöbel, für Matratzen oder Kissen im orthopädischen und/oder medizinischen Bereich oder für Schuh (einlege)sohlen eingesetzt. Ein weiteres Einsatzgebiet sind Autosicherheitteile, Auflageflächen, Armlehnen und ähnliche Teile im Möbelbereich und im Automobilbau

Die Erfindung soll an den nachfolgenden Beispielen näher beschrieben werden.

1. Herstellung der Graftpolyole

Allgemeine Vorschrift

Die Herstellung der Graftpolyole erfolgte in einem 4-Liter Glaskolben mit einstufigem Rührwerk, aufgesetztem Rückflusskühler und elektrischem Heizmantel. Vor Beginn der Reaktion wurde der Reaktor mit einem Gemisch aus Carrierpolyol, im Fall von bimodalen Graftpolyolen zusätzlich einem monomodalen Graftpolyol als Saat, und einem Teil des Makromers gefüllt, mit Stickstoff gespült und auf die Synthesetemperatur von 125°C erwärmt. Die verbleibende Menge Makromer wurde während der Synthese hinzudosiert. Der restliche Teil der Reaktionsmischung, bestehend aus weiterem Carrierpolyol, Initiator und den Monomeren, wurde in zwei Dosierbehältern vorgelegt. Die Synthese der Graftpolyole erfolgte durch Überführen der Rohstoffe mit konstanter Dosiergeschwindigkeit über einen statischen In-line-Mischer in den Reaktor. Die Dosierdauer für das Monomer-Moderator-Gemisch betrug 150 Minuten, während das Polyol-Initiator-Gemisch über 165 Minuten in den Reaktor dosiert wurde. Nach weiteren 10 Minuten Nachreaktionszeit bei 125°C wurde das Produkt bei einer Temperatur von 135°C unter Vakuum (< 0,1 mbar) von den nicht umgesetzten Monomeren und anderen flüchtigen Verbindungen befreit. Das Endprodukt wurde mit Antioxidantien stabilisiert.

Carrierpolyole

Polyol 1

Polyetherpolyol aus Glyercin , Propylenoxid und Ethylenoxid

Hydroxylzahl:    35 mg/gKOH

Polyol 1 ist ein Carrierpolyol für das nicht erfindungsgemäße Graftpolyol 4.

Polyol 2

Polyetherpolyol aus Glyercin , Propylenoxid und Ethylenoxid

Hydroxylzahl:    170 mg/gKOH

Polyol 2 ist ein Carrierpolyol für die erfindungsgemäßen Graftpolyole 1-3.

Makromer

Makromer 1

Ungesättigtes Polyetherpolyol aus Sorbitol, Propylenoxid, Ethylenoxid und Meta-Isopropenylbenzylisocyanat

OH-Zahl:     19,5 mg/gKOH
Viskosität:   3200 mPas bei 25°C

Das Makromer 1 wird nach der obigen allgemeinen Vorschrift zur Synthese der Graftpolyole eingesetzt.

Graftpolyole

Graftpolyol 1

Monomodales Graft Polyol in Polyol 2

Feststoff:        Poly-(Acrylnitril-co-Styrol), Massenanteile ACN:STY = 1:2
Feststoffgehalt:  45 Gew.% bez. auf die Gesamtmasse der Dispersion
OH-Zahl:          110 mgKOH/g

(fortgesetzt)

| Carrierpolyol: | Polyol 2 |
|---|---|
| Initiator: | Azo-Radikalstarter |
| Moderator: | n-Dodecanthiol (1 Gew.% bez. auf Monomer) |
| Makromer: | Makromer 1 |

Das Graftpolyol 1 ist Zwischenprodukt für die Herstellung der Graftpolyole 2 und 3.

Graftpolyol 2:

Bimodales Graftpolyol in Polyol 2 (erfindungsgemäßes Beispiel)

| Saat: | Graftpolyol 1 (7,5 Gew.% bez. auf Gesamtmenge) |
|---|---|
| Feststoff: | Poly-(Acrylnitril-co-Styrol), Massenanteile ACN:STY = 1:2 |
| Feststoffgehalt: | 45 Gew.% bez. auf die Gesamtmasse der Dispersion |
| OH-Zahl: | 91,8 mgKOH/g |
| Viskosität: | 2638 mPas bei 25°C |
| Carrierpolyol: | Polyol 2 |
| Initiator: | Azo-Radikalstarter |
| Moderator: | n-Dodecanthiol (1 Gew.% bez. auf Monomer) |
| Makromer: | Makromer 1 |

Graftpolyol 3

Bimodales Graftpolyol in Polyol 2 (erfindungsgemäßes Beispiel)

| Saat: | Graftpolyol 1 (7,5 Gew.% bez. auf Gesamtmenge) |
|---|---|
| Feststoff: | Poly-(Acrylnitril-co-Styrol), Massenanteile ACN:STY = 1:2 |
| Feststoffgehalt: | 47 Gew.% bez. auf die Gesamtmasse der Dispersion |
| OH-Zahl: | 83,7 mgKOH/g |
| Viskosität: | 2593 mPas bei 25°C |
| Carrierpolyol: | Polyol 2 |
| Initiator: | Azo-Radikalstarter |
| Moderator: | n-Dodecanthiol (1,05 Gew.% bez. auf Monomer) |
| Makromer: | Makromer 1 |

Graftpolyol 4

Bimodales Graftpolyol in Polyol 1 (nicht-erfindungsgemäßes Beispiel, Referenz)

| Saat: | Graftpolyol 1 (7,5 Gew.% bez. auf Gesamtmenge) |
|---|---|
| Feststoff: | Poly-(Acrylnitril-co-Styrol), Massenanteile ACN:STY = 1:2 |
| Feststoffgehalt: | 45 Gew.% bez. auf die Gesamtmasse der Dispersion |
| OH-Zahl: | 20 mgKOH/g |
| Viskosität: | 9000 mPas bei 25°C |
| Carrierpolyol: | Polyol 1 |
| Initiator: | Azo-Radikalstarter |
| Moderator: | n-Dodecanthiol (1,05 Gew.% bez. auf Monomer) |
| Makromer: | Makromer 1 |

| Polyol 3 | Polyetheralkohol auf Basis von Propylenglykol und Propylenoxid Hydroxylzahl 55 mg/KOH |
|---|---|

(fortgesetzt)

| Polyol 4 | Polyetheralkohol auf Basis von Propylenglykol und Propylenoxid Hydroxylzahl 250 mg/KOH |
|---|---|
| Polyol 5 | Polyetheralkohol auf Basis von Ethylenglykol und Ethylenoxid Hydroxylzahl 190 mg/KOH |
| Katalysator 1 | Lupragen® N201 - Aminkatalysator der Firma BASF SE |
| Katalysator 2 | Lupragen® N206 - Aminkatalysator der Firma BASF SE |
| Katalysator 3 | Kosmos® 29 - Zinnkatalysator der Firma Air-Products |
| Stabilisator 1 | NIAX Silicone L-627 der Firma General Electrics |

2. Herstellung der Schäume

Aus den in der Tabelle angegebenen Polyolen, Katalysatoren und Zusatzstoffen wurde durch Mischung eine Polyolkomponente hergestellt. die angegebenen Mengen sind gewichtsteile. Die Polyolkomponente wurde mit 100 Gewichtsteilen Toluylendiisocyanat 80/20 in den Beispielen 1 bis 6 bei dem angegebenen Index im Handansatz vermischt und die Mischung in eine offene Metallform mit den Abmessungen 40x40x40 cm gegeben, wo sie zum Weichschaum aushärtete.

Die Zusammensetzung der Formulierung, die Schäumparameter und die mechanischen Eigenschaften der Schäume sind in Tabelle 1 angegeben.

Die nicht-erfindungsgemäßen Beispiele Nr. 1 und 2 sind als Referenz mit in Tabelle 1 aufgeführt.

Tabelle 1

| Komponente | Einheit | nicht erfindungsgemäßes Beispiel 1 | nicht erfindungsgemäßes Beispiel 2 | 3 | 4 | 5 | 6 | 7 |
|---|---|---|---|---|---|---|---|---|
| Graftpolyol 2 | Gew.-% bezogen auf Gesamt-Polyol | | | 20 | 40 | | | |
| Graftpolyol 3 | Gew.-% bezogen auf Gesamt-Polyol | | | | | 20 | 20 | 40 |
| Graftpolyol 4 | Gew.-% bezogen auf Gesamt-Polyol | 20 | 40 | | | | | |
| Polyol 2 | Gew.-% bezogen auf Gesamt-Polyol | 80 | 60 | 80 | 60 | 20 | 50 | 30 |
| Polyol 3 | Gew.-% bezogen auf Gesamt-Polyol | | | | | 15 | 10 | 10 |

(fortgesetzt)

| Komponente | Einheit | nicht erfindungsgemäßes Beispiel 1 | nicht erfindungsgemäßes Beispiel 2 | 3 | 4 | 5 | 6 | 7 |
|---|---|---|---|---|---|---|---|---|
| Poylol 4 | Gew.-% bezogen auf Gesamt-Polyol | | | | | 25 | | |
| Polyol 5 | Gew.-% bezogen auf Gesamt-Polyol | | | | | 25 | 20 | 20 |
| | | | | | | | | |
| Katalysator 1 | Gew.-% bezogen auf Gesamt-Polyol | 0,10 | 0,10 | 0,10 | 0,10 | 0,07 | 0,07 | 0,07 |
| Katalysator 2 | Gew.-% bezogen auf Gesamt-Polyol | 0,15 | 0,15 | 0,15 | 0,15 | 0,20 | 0,20 | 0,20 |
| Katalysator 3 | Gew.-% bezogen auf Gesamt-Polyol | 0,05 | 0,05 | 0,05 | 0,05 | 0.19 | 0,19 | 0,19 |
| Stabilisator 1 | Gew.-% bezogen auf Gesamt-Polyol | 1,20 | 1,20 | 1,20 | 1,20 | 1,20 | 1,20 | 1,20 |
| Wasser | Gew.-% bezogen auf Gesamt-Polyol | 1,60 | 1,60 | 1,60 | 1,60 | 2,20 | 2,20 | 2,20 |
| | | | | | | | | |
| TDI | Gew.-% bezogen auf Gesamt-Isocyanat | 100 | 100 | 100 | 100 | 100 | 100 | 100 |
| Index | | 95 | 95 | 95 | 95 | 95 | 95 | 95 |

(fortgesetzt)

| Eigenschaften | | 1 | 2 | 3 | 4 | 5 | 6 | 7 |
|---|---|---|---|---|---|---|---|---|
| Abbindezeit | s | 125 | 135 | 112 | 107 | 137 | 62 | 57 |
| Raumgewicht | g/l | 50,5 | 48,9 | 51 | 50,5 | 43,9 | 44,0 | 43,4 |
| Stauchhärte | kPa | 3 | 4,3 | 3,1 | 4,3 | 1,7 | 2,2 | 2,4 |
| Rückprall-elastizität | % | 5 | 13 | 3 | 5 | 8 | 8 | 11 |

Die Bestimmung des Raumgewichts erfolgte nach DIN EN ISO 845, die Bestimmung der Stauchhärte erfolgte nach DIN EN ISO 3386-1, und die Bestimmung der Rückprallelastizität (RPE) erfolgte nach DIN EN ISO 8307.

**Patentansprüche**

1.  Verfahren zur Herstellung von viskoelastischen Polyurethan-Weichschaumstoffen durch Umsetzung von

    a) Polyisocyanaten mit
    b) Verbindungen mit mindestens zwei mit Isocyanatgruppen reaktiven Wasserstoffatomen,
    c) Treibmitteln,

    **dadurch gekennzeichnet, dass** die Verbindungen mit mindestens zwei mit Isocyanatgruppen reaktiven Wasserstoffatomen b)

    b1) 5 bis 90 Gew.-Teile mindestens eines Polyetheralkohols, bestehend aus ausschließlich Propylenoxideinheiten oder Propylenoxideinheiten und maximal 50 Gew.-%, bezogen auf die Gesamtmenge der eingesetzten Alkylen-oxide Ethylenoxideinheiten in der Polyetherkette, mit einer nominalen Funktionalität von 3-8 und einer Hydroxylzahl im Bereich von 100 bis 350 mgKOH/g, und
    b2) 10 bis 95 Gew.-Teile mindestens eines Graftpolyols, herstellbar durch in-situ-Polymerisation von olefinisch ungesättigten Monomeren in mindestens einem Polyetheralkohol, der ausschließlich Propylenoxideinheiten oder Propylenoxideinheiten und maximal 50 Gew.-%, bezogen auf die Gesamtmenge der eingesetzten Alkylenoxide Ethylenoxideinheiten in der Polyetherkette, eine nominale Funktionalität von 2-8 und eine Hydroxylzahl im Bereich von 100 bis 350 mgKOH/g aufweist, mit einem Feststoffgehalt von maximal 60 Gew.-% bezogen auf die Gesamtmenge der eingesetzten Polyole und Feststoff,

    enthalten, wobei sich die Summe der Gewichtsteile b1) und b2) 100 beträgt.

2.  Verfahren nach Anspruch 1, **dadurch gekennzeichnet, dass** der Polyetheralkohol b1) 25 Gew.-%, bezogen auf die Gesamtmenge der eingesetzten Alkylenoxide, Ethylenoxideinheiten in der Polyetherkette aufweist.

3.  Verfahren nach Anspruch 1, **dadurch gekennzeichnet, dass** der Polyetheralkohol b1) 15 Gew.-%, bezogen auf die Gesamtmenge der eingesetzten Alkylenoxide, Ethylenoxideinheiten in der Polyetherkette aufweist.

4.  Verfahren nach Anspruch 1, **dadurch gekennzeichnet, dass** der Polyetheralkohol b1) 5 Gew.-%, bezogen auf die Gesamtmenge der eingesetzten Alkylenoxide, Ethylenoxideinheiten in der Polyetherkette aufweist.

5.  Verfahren nach Anspruch 1, **dadurch gekennzeichnet, dass** der Polyetheralkohol b1) eine Funktionalität von 3 bis 6 aufweist.

6.  Verfahren nach Anspruch 1, **dadurch gekennzeichnet, dass** der Polyetheralkohol b1) eine Funktionalität von 3 bis 4 aufweist.

7.  Verfahren nach Anspruch 1, **dadurch gekennzeichnet, dass** das Graftpolyol b2) 25 Gew.-%, bezogen auf die Gesamtmenge der eingesetzten Alkylenoxide, Ethylenoxideinheiten in der Polyetherkette aufweist.

8.  Verfahren nach Anspruch 1, **dadurch gekennzeichnet, dass** das Graftpolyol b2) 15 Gew.-%, bezogen auf die Gesamtmenge der eingesetzten Alkylenoxide, Ethylenoxideinheiten in der Polyetherkette aufweist.

9. Verfahren nach Anspruch 1, **dadurch gekennzeichnet, dass** das Graftpolyol b2) 5 Gew.-%, bezogen auf die Gesamtmenge der eingesetzten Alkylenoxide, Ethylenoxideinheiten in der Polyetherkette aufweist.

10. Verfahren nach Anspruch 1, **dadurch gekennzeichnet, dass** das Graftpolyol b2) eine Funktionalität von 3 bis 6 aufweist.

11. Verfahren nach Anspruch 1, **dadurch gekennzeichnet, dass** das Graftpolyol b2) eine Funktionalität von 3 bis 4 aufweist.

12. Verfahren nach Anspruch 1, **dadurch gekennzeichnet, dass** die Komponente b) zusätzlich zu den 100 Gew.-Teilen der Polyetheralkohole b1) und b2) bis zu 70 Gew.-Teile mindestens eines Polyetheralkohols b3), bestehend aus ausschließlich Propylenoxideinheiten oder Propylenoxideinheiten und maximal 20 Gew.-%, bezogen auf die Gesamtmenge der eingesetzten Alkylenoxide, Ethylenoxideinheiten in der Polyetherkette, mit einer nominalen Funktionalität von 2 und einer Hydroxylzahl im Bereich von 50 bis 350 mgKOH/g, aufweist, wobei die Summe der Gewichtsteile von b1, b2 und b3 beträgt größer 100 und maximal 200 Gew.-Teile ist.

13. Verfahren nach Anspruch 1, **dadurch gekennzeichnet, dass** die Komponente b) zusätzlich zu den 100 Gew.-Teilen der Polyetheralkohole b1) und b2) bis zu 30 Gew.-Teile mindestens eines Polyetheralkohols b4) bestehend aus ausschließlich Ethylenoxideinheiten oder Ethylenoxideinheiten und maximal 20 Gew.-%., bezogen auf die Gesamtmenge der eingesetzten Alkylenoxide, Propylenoxideinheiten in der Polyetherkette, mit einer nominalen Funktionalität von 2 bis 3 und einer Hydroxylzahl im Bereich von 50 bis 550 mgKOH/g, wobei die Summe der Gewichtsteile von b1, b2 und b3 größer 100 und maximal 150 Gew.-Teile ist.

14. Verfahren nach Anspruch 1, **dadurch gekennzeichnet, dass** die Komponente b) zusätzlich zu den 100 Gew.-Teilen der Polyetheralkohole b1) und b2) bis zu 70 Gew.-Teile mindestens eines Polyetheralkohols b3) und bis zu 30 Gew.-Teile mindestens eines Polyetheralkohols b4) enthält, wobei die Summe der Gewichtsteile von b1, b2 und b3 größer 100 und maximal 250 Gew.-Teile ist.

15. Verfahren nach Anspruch 1, **dadurch gekennzeichnet, dass** das Graftpolyol b2) durch in-situ Polymerisation von olefinisch ungesättigten Monomeren in einem Polyetheralkohol b1) hergestellt wird.

16. Verfahren nach Anspruch 1, **dadurch gekennzeichnet, dass** das Hydroxylzahl des Graftpolyols b2) sich nach der Formel berechnet

$$\text{Hydroxylzahl Graftpolyol} = \text{Hydroxylzahl Carrierpolyol} \times (100 - F) / 100,$$

wobei
F ist der Zahlenwert für den Feststoffgehalt des Graftpolyols in Gew.-%, bezogen auf das Gewicht des Graftpolyols ist und die Hydroxylzahl des Carrierpolyols gleich der Hydroxylzahl von Polyol b1) ist.

**Claims**

1. A process for producing viscoelastic flexible polyurethane foams by reacting

   a) polyisocyanates with
   b) compounds having at least two hydrogen atoms which are reactive toward isocyanate groups,
   c) blowing agents,
   wherein the compounds having at least two hydrogen atoms which are reactive toward isocyanate groups b) comprise

   b1) from 5 to 90 parts by weight of at least one polyether alcohol consisting of exclusively propylene oxide units or propylene oxide units and not more than 50% by weight, based on the total weight of the alkylene oxides used, of ethylene oxide units in the polyether chain and having a nominal functionality of from 3 to 8 and a hydroxyl number in the range from 100 to 350 mg KOH/g, and

b2) from 10 to 95 parts by weight of at least one graft polyol which can be prepared by in-situ polymerization of olefinically unsaturated  monomers in at least one polyether alcohol which has exclusively propylene oxide units or propylene oxide units and not more than 50% by weight, based on the total amount of alkylene oxides used, of ethylene oxide units in the polyether chain, a nominal functionality of from 2 to 8 and a hydroxyl number in the range from 100 to 350 mg KOH/g, having a solids content of not more than 60% by weight, based on the total amount of polyols and solids used,

where the sum of the parts by weight of b1) and b2) is 100.

2. The process according to claim 1, wherein polyether alcohol b1) has 25% by weight, based on the total amount of the alkylene oxides used, of ethylene oxide units in the polyether chain.

3. The process according to claim 1, wherein the polyether alcohol b1) has 15% by weight, based on the total amount of the alkylene oxides used, of ethylene oxide units in the polyether chain.

4. The process according to claim 1, wherein the polyether alcohol b1) has 5% by weight, based on the total amount of the alkylene oxides used, of ethylene oxide units in the polyether chain.

5. The process according to claim 1, wherein the polyether alcohol b1) has a functionality of from 3 to 6.

6. The process according to claim 1, wherein the polyether alcohol b1) has a functionality of from 3 to 4.

7. The process according to claim 1, wherein the graft polyol b2) has 25% by weight, based on the total amount of the alkylene oxides used, of ethylene oxide units in the polyether chain.

8. The process according to claim 1, wherein the graft polyol b2) has 15% by weight, based on the total amount of the alkylene oxides used, of ethylene oxide units in the polyether chain.

9. The process according to claim 1, wherein the graft polyol b2) has 5% by weight, based on the total amount of the alkylene oxides used, of ethylene oxide units in the polyether chain.

10. The process according to claim 1, wherein the graft polyol b2) has a functionality of from 3 to 6.

11. The process according to claim 1, wherein the graft polyol b2) has a functionality of from 3 to 4.

12. The process according to claim 1, wherein the component b) has, in addition to the 100 parts by weight of the polyether alcohols b1) and b2), up to 70 parts by weight of at least one polyether alcohol b3) consisting of exclusively propylene oxide units or propylene oxide units and not more than 20% by weight, based on the total amount of the alkylene oxide units, of ethylene oxide units in the polyether chain and having a nominal functionality of 2 and a hydroxyl number in the range from 50 to 350 mg KOH/g, where the sum of the parts by weight of b1, b2 and b3 is greater than 100 and not more than 200 parts by weight.

13. The process according to claim 1, wherein the component b) has, in addition to the 100 parts by weight of the polyether alcohols b1) and b2), up to 30 parts by weight of at least one polyether alcohol b4) consisting of exclusively ethylene oxide units or ethylene oxide units and not more than 20% by weight, based on the total weight of the alkylene oxides used, of propylene oxide units in the polyether chain and having a nominal functionality of from 2 to 3 and a hydroxyl number in the range from 50 to 550 mg KOH/g, where the sum of the parts by weight of b1, b2 and b3 is greater than 100 and not more than 150 parts by weight.

14. The process according to claim 1, wherein the component b) comprises, in addition to the 100 parts by weight of the polyether alcohols b1) and b2), up to 70 parts by weight of at least one polyether alcohol b3) and up to 30 parts by weight of at least one polyether alcohol b4), where the sum of the parts by weight of b1, b2 and b3 is greater than 100 and not more than 250 parts by weight.

15. The process according to claim 1, wherein the graft polyol b2) is prepared by in-situ polymerization of olefinically unsaturated monomers in a polyether alcohol b1).

**16.** The process according to claim 1, wherein the hydroxyl number of the graft polyol b2) is calculated according to the formula

```
hydroxyl number of graft polyol = hydroxyl number
of carrier polyol × (100-S)/100,
```

where
S is the numerical value of the solids content of the graft polyol in % by weight, based on the weight of the graft polyol, and the hydroxyl number of the carrier polyol is equal to the hydroxyl number of polyol b1).

**Revendications**

**1.** Procédé pour la production de mousses souples de polyuréthanne viscoélastiques, par mise en réaction

a) de polyisocyanates avec
b) des composés comportant au moins deux atomes d'hydrogène réactifs avec des groupes isocyanate,
c) des agents d'expansion,
**caractérisé en ce que** les composés b) comportant au moins deux atomes d'hydrogène réactifs avec des groupes isocyanate contiennent
b1) 5 à 90 parties en poids d'au moins un polyétheralcool constitué exclusivement de motifs polyoxypropylène ou constitué de motifs polyoxypropylène et d'au maximum 50 % en poids, par rapport à la quantité totale des oxydes d'alkylène utilisés, de motifs oxyde d'éthylène dans la chaîne polyéther, et ayant une fonctionnalité nominale de 3 à 8 et un indice de groupes hydroxy dans la plage de 100 à 350 mg de KOH/g, et
b2) 10 à 95 parties en poids d'au moins un polyol greffé, pouvant être préparé par polymérisation in situ de monomères à insaturation oléfinique dans au moins un polyétheralcool, qui comporte exclusivement des motifs oxyde de propylène ou comporte des motifs oxyde de propylène et au maximum 50 % en poids, par rapport à la quantité totale des oxydes d'alkylène utilisés, de motifs oxyde d'éthylène dans la chaîne polyéther, et présente une fonctionnalité nominale de 2 à 8 et un indice de groupes hydroxy dans la plage de 100 à 350 mg de KOH/g, avec une teneur en matière solide d'au maximum 60 % en poids, par rapport à la quantité totale des polyols utilisés et à la matière solide,

la somme des parties en poids de b1) et b2) étant égale à 100.

**2.** Procédé selon la revendication 1, **caractérisé en ce que** le polyétheralcool b1) comporte dans la chaîne polyéther 25 % en poids de motifs oxyde d'éthylène, par rapport à la quantité totale des oxydes d'alkylène utilisés.

**3.** Procédé selon la revendication 1, **caractérisé en ce que** le polyétheralcool b1) comporte dans la chaîne polyéther 15 % en poids de motifs oxyde d'éthylène, par rapport à la quantité totale des oxydes d'alkylène utilisés.

**4.** Procédé selon la revendication 1, **caractérisé en ce que** le polyétheralcool b1) comporte dans la chaîne polyéther 5 % en poids de motifs oxyde d'éthylène, par rapport à la quantité totale des oxydes d'alkylène utilisés.

**5.** Procédé selon la revendication 1, **caractérisé en ce que** le polyétheralcool b1) présente une fonctionnalité de 3 à 6.

**6.** Procédé selon la revendication 1, **caractérisé en ce que** le polyétheralcool b1) présente une fonctionnalité de 3 à 4.

**7.** Procédé selon la revendication 1, **caractérisé en ce que** le polyol greffé b2) comporte dans la chaîne polyéther 25 % en poids de motifs oxyde d'éthylène, par rapport à la quantité totale des oxydes d'alkylène utilisés.

**8.** Procédé selon la revendication 1, **caractérisé en ce que** le polyol greffé b2) comporte dans la chaîne polyéther 15 % en poids de motifs oxyde d'éthylène, par rapport à la quantité totale des oxydes d'alkylène utilisés.

**9.** Procédé selon la revendication 1, **caractérisé en ce que** le polyol greffé b2) comporte dans la chaîne polyéther 5 % en poids de motifs oxyde d'éthylène, par rapport à la quantité totale des oxydes d'alkylène utilisés.

**10.** Procédé selon la revendication 1, **caractérisé en ce que** le polyol greffé b2) présente une fonctionnalité de 3 à 6.

**11.** Procédé selon la revendication 1, **caractérisé en ce que** le polyol greffé b2) présente une fonctionnalité de 3 à 4.

**12.** Procédé selon la revendication 1, **caractérisé en ce que** le composant b) comporte, en plus des 100 parties en poids des polyétheralcools b1) et b2), jusqu'à 70 parties en poids d'au moins un polyétheralcool b3), constitué exclusivement de motifs oxyde de propylène ou constitué de motifs oxyde de propylène et d'au maximum 20 % en poids, par rapport à la quantité totale des oxydes d'alkylène utilisés, de motifs oxyde d'éthylène dans la chaîne polyéther, et présente une fonctionnalité nominale de 2 et un indice de groupes hydroxy dans la plage de 50 à 350 mg de KOH/g, la somme des parties en poids de b1, b2 et b3 étant supérieure à 100 et au maximum de 200 parties en poids.

**13.** Procédé selon la revendication 1, **caractérisé en ce que** le composant b) comporte, en plus des 100 parties en poids des polyétheralcools b1) et b2), jusqu'à 30 parties en poids d'au moins un polyétheralcool b4), constitué exclusivement de motifs oxyde d'éthylène ou constitué de motifs oxyde d'éthylène et d'au maximum 20 % en poids, par rapport à la quantité totale des oxydes d'alkylène utilisés, de motifs oxyde de propylène dans la chaîne polyéther, et présente une fonctionnalité nominale de 2 à 3 et un indice de groupes hydroxy dans la plage de 50 à 550 mg de KOH/g, la somme des parties en poids de b1, b2 et b3 étant supérieure à 100 et au maximum de 150 parties en poids.

**14.** Procédé selon la revendication 1, **caractérisé en ce que** le composant b) contient, en plus des 100 parties en poids des polyétheralcools b1) et b2), jusqu'à 70 parties en poids d'au moins un polyétheralcool b3) et jusqu'à 30 parties en poids d'au moins un polyétheralcool b4), la somme des parties en poids de b1, b2 et b3 étant supérieure à 100 et au maximum de 250 parties en poids.

**15.** Procédé selon la revendication 1, **caractérisé en ce qu'**on prépare le polyol greffé b2) par polymérisation in situ de monomères à insaturation oléfinique dans un polyétheralcool b1).

**16.** Procédé selon la revendication 1, **caractérisé en ce que** l'indice de groupes hydroxy du polyol greffé b2) se calcule selon la formule

```
indice de groupes hydroxy du polyol greffé = indice de
groupes hydroxy du polyol porteur × (100-F)/100,
```

F étant la valeur numérique de la teneur en matière solide du polyol greffé en % en poids, par rapport au poids du polyol greffé et l'indice de groupes hydroxy du polyol porteur étant égal à l'indice de groupes hydroxy du polyol b1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007065837 A
- US 20040254256 A
- EP 1240228 A
- WO 02088211 A
- WO 0125305 A
- WO 040254256 A
- WO 0104178 A
- US 6013731 A

- US 4689354 A
- EP 0365986 A
- EP 0510533 A
- EP 0640633 A
- EP 008444 A
- EP 0731118 B1
- WO 03078496 A

**In der Beschreibung aufgeführte Nicht-Patentliteratur**

- Kunststoff-Handbuch, Band VII Polyurethane. Carl Hanser Verlag, 1966, vol. VII, 1-3